Europäisches Patentamt

European Patent Office

Office européen des brevets

(19)

(11) Veröffentlichungsnummer: **0 212 377**
A2

# (12) EUROPÄISCHE PATENTANMELDUNG

(21) Anmeldenummer: 86110561.7

(22) Anmeldetag: 30.07.86

(51) Int. Cl.⁴: **G 11 B 33/04**

(30) Priorität: 12.08.85 DE 8523194 U

(43) Veröffentlichungstag der Anmeldung: 04.03.87
Patentblatt 87/10

(84) Benannte Vertragsstaaten: CH DE FR GB IT LI NL

(71) Anmelder: **Siemens Aktiengesellschaft Berlin und München, Wittelsbacherplatz 2, D-8000 München 2 (DE)**

(72) Erfinder: **Kalthoff, Gerd-Otto, Dipl.-Ing., Reinschartenweg 23a, D-8520 Erlangen (DE)**
Erfinder: **Rentzsch, Heinz, Unterer Pelzhügel 27d, D-8630 Coburg (DE)**

(54) **Cassette für eine Compactdisc aus Kunststoff.**

(57) Bei einer zweiteiligen Cassette mit gleichen Abmessungen für das Unterteil 3 und das Oberteil 4 für eine Compactdisc aus vornehmlich durchsichtigem Thermoplast weist das Cassettenunterteil 3 eine einstückige elastische Mittelzentrierung 1 zur Ausnahme einer Compactdisc auf. Die Längsseite 6 des Cassettenunterteils 3 und des Oberteils 4 haben gegenseitig zueinander abgeschrägte Stirnseiten 7. Die Schmalseite 11 des Cassettenoberteils 4 hat seitlich zwei kraftschlüssige Arretierungen 8, die in eine gegenläufige Schräge 9 des Cassettenunterteils 3 einrasten, und eine zurückgesetzte Fläche 10 zum Öffnen der Cassette.

Siemens Aktiengesellschaft     Unser Zeichen
Berlin und München        VPA   P 3 2 7 1 E

## Cassette für eine Compactdisc aus Kunststoff

Die Erfindung bezieht sich auf eine Cassette für eine Compactdisc aus Kunststoff mit durch zwei Scharniere drehbar verbundenem Cassettenunter- und Cassettenoberteil.

Bekannt sind komplette Verpackungen für Compactdiscs, sogenannte Disccassetten, bestehend aus einem Tablett zur Aufnahme der Scheibe und einem dazu passenden Gehäuse bestehend aus einem Ober- und einem Unterteil. Das Tablett und das Unterteil werden durch einen Schnappverbund zusammengehalten. Das Oberteil ist durch zwei Scharniere drehbar auf dem Unterteil gelagert.

Aufgabe der Erfindung ist es, eine einfachere Konstruktion zu verwirklichen, die trotzdem den Anforderungen einer soliden Verpackung gerecht wird.

Diese Aufgabe wird dadurch gelöst, daß erfindungsgemäß

a) im Cassettenunterteil eine einstückige elastische Mittelzentrierung mit leicht erhöhter Auflagefläche zur Aufnahme einer Compactdisc angeordnet ist,

b) die Außenabmessungen des Cassettenunterteils und des Cassettenoberteils gleich sind,

c) die Längsseiten des Cassettenoberteils und des Cassettenunterteils gegenseitig zueinander abgeschrägte Stirnseiten aufweisen und

d) die Schmalseite des Cassettenoberteils seitlich zwei kraftschlüssige Arretierungen hat, die in eine gegenläufige Schräge des Cassettenunter-

Td 2 Koe / 8.08.1985

teils einrasten und eine zurückgesetzte Fläche zum Öffnen der Cassette.

Als besonders vorteilhaft hat sich eine einstückige elastische Mittelzentrierung, die mit dem Cassettenunterteil verbunden ist, erwiesen.

Die Herstellung einer erfindungsgemäßen Cassette ist einfach und rationell maschinell durchzuführen. Da die erfindungsgemäße zweiteilige Cassette einen einfachen klar gegliederten Cassettenbereich hat, sind keine aufwendigen formgebenden Konstruktionsteile im Spritzgußwerkzeug erforderlich. Die Handhabung der Verpackung und die Entnahme der Compactdiscs ist einfach. Der Sitz der letzteren auf der Mittelzentrierung ist fest und sicher. Bei Verwendung eines durchsichtigen Kunststoffs ist eine Beschriftung sowohl auf der Ober- als auch auf der Unterseite sichtbar und auf diesen anbringbar, sofern nicht schon die Compactdisc die gewünschte Aufschrift trägt. Es kann so ein vielfacher Wunsch befriedigt werden, die Innenseite des Cassettenoberteils mit dem Titel oder einer beliebigen Beschriftung oder Zeichnung zu versehen.

Geeignete Kunststoffe sind Thermoplaste, insbesondere Polystyrol. Vorzugsweise werden farblose, glasklare Formstoffe eingesetzt.

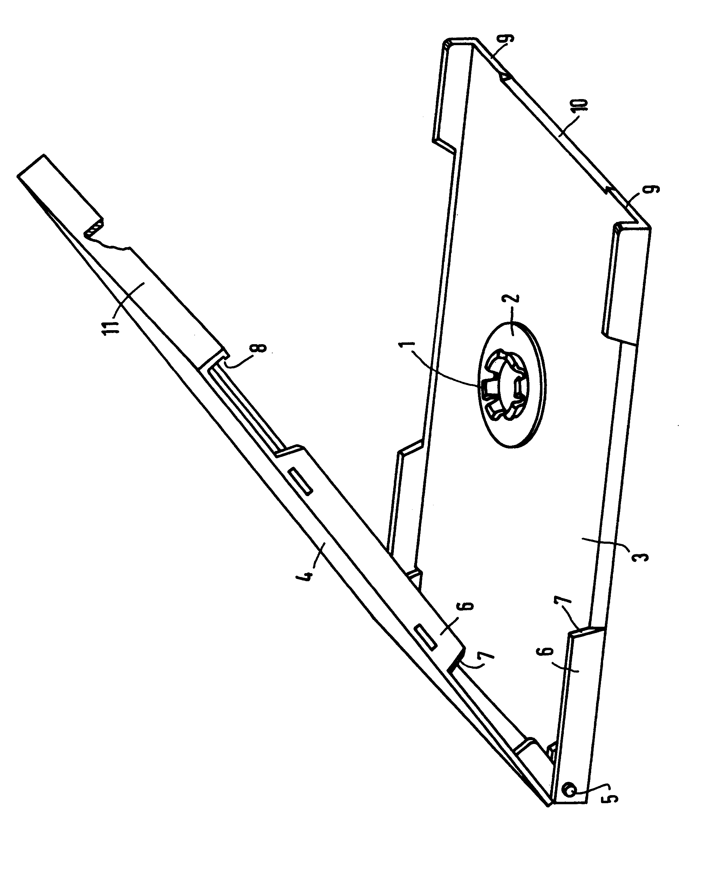

Die Erfindung wird durch die Zeichnung näher erläutert.

Das Cassettenunterteil 3 der zweiteiligen Cassette hat eine elastische Mittelzentrierung 1 mit einer erhöhten Scheibenauflage 2. Die elastische Mittelzentrierung aus einem Thermoplast dient zum Aufnehmen einer Compactdisc und hält diese sicher fest. Das Cassettenoberteil 4, das die gleichen Abmessungen wie das Cassettenunterteil 3 hat, ist mit Seitenwänden 6 mit gegenseitig zueinander abgeschrägten Stirnseiten 7 versehen, wodurch eine besonders gute Abdichtung erreicht wird. Die Schmalseite 11 des Cassettenoberteils 4 hat seitlich zwei kraftschlüssige Arretierungen 8, die in eine gegenläufige Schräge 9 des Cassettenunterteils 3 einrasten. Die Fläche 10 ist etwas zurückgesetzt. Hierdurch ist ein Öffnen der Cassette durch leichten manuellen Druck möglich. Das Cassettenoberteil 4 und das Cassettenunterteil 3 sind durch zwei Scharniere 5 drehbar miteinander verbunden.

3 Patentansprüche

1 Figur

Patentansprüche

1. Cassette für eine Compactdisc aus Kunststoff mit durch zwei Scharnieren drehbar verbundenem Cassettenunterteil und Cassettenoberteil, d a d u r c h g e k e n n z e i c h n e t , daß
   a) im Cassettenunterteil (3) eine einstückige elastische Mittelzentrierung (1) mit leicht erhöhter Auflagefläche (2) zur Aufnahme einer Compactdisc angeordnet ist,
   b) die Abmessungen des Cassettenunterteils (3) und des Cassettenoberteils (4) gleich sind,
   c) die Längsseiten (6) des Cassettenoberteils (4) und des Cassettenunterteils (3) gegenseitig zueinander abgeschrägte Stirnseiten (7) aufweisen,
   d) die Schmalseite (11) des Cassettenoberteils (4) seitlich zwei kraftschlüssige Arretierungen (8) hat, die in eine gegenläufige Schräge (9) des Cassettenunterteils (3) einrasten und eine zurückgesetzte Fläche (10) zum Öffnen der Cassette.

2. Cassette für eine Compactdisc nach Anspruch 1, d a d u r c h g e k e n n z e i c h n e t , daß die elastische Mittelzentrierung (1) einstückig mit dem Cassettenunterteil 3 verbunden ist.

3. Cassette für eine Compactdisc nach Anspruch 1 oder 2, d a d u r c h g e k e n n z e i c h n e t , daß das Cassettenunterteil (3) und das Cassettenoberteil (4) aus einem durchsichtigen Kunststoff bestehen und auf der Innenseite des Cassettenoberteils (3) eine beliebige Aufzeichnung oder Beschriftung angebracht ist.

0212377

1/1